# EUROPÄISCHE PATENTSCHRIFT

(11) **EP 0 597 328 B1**
(45) Veröffentlichungstag und Bekanntmachung des Hinweises auf die Patenterteilung: **02.01.1997**
(21) Anmeldenummer: 93117468.4
(22) Anmeldetag: 28.10.1993
(51) Int. Cl.: C09D 13/00, B43K 19/02, C09B 67/00

(54) **Feststoffmine**
Solid marking lead
Mine graphique solide

(30) Priorität: 11.11.1992 DE 9215344 U
(43) Veröffentlichungstag der Anmeldung: 18.05.1994
(73) Patentinhaber: A.W. Faber- Castell Unternehmensverwaltung GmbH & Co., D-90547 Stein (DE)
(72) Erfinder: Schlennert, Barbara, D-90613 Grosshabersdorf (DE); Lugert, Gerhard, Dr., D-90431 Nürnberg (DE)
(74) Vertreter: Tergau, Enno, Dipl.-Ing.

(56) Entgegenhaltungen:
- EP-A- 0 344 379
- DE-U- 7 830 645
- US-A- 3 057 806
- DATABASE WPI Section Ch, Week 7751, Derwent Publications Ltd., London, GB; Class A84, AN 77-91096Y & JP-A-52 134 519 (NAGASHIMA T) 10. November 1977

## Beschreibung

Die Erfindung betrifft ein Verfahren zur Herstellung einer Feststoffmine insbesondere für Buntstifte. Derartige, beispielsweise aus DE- GBM 7 830 645 bekannte Feststoffminen weisen im allgemeinen eine Fettsäurederivate und Füllstoffe enthaltende Grundmasse auf. Um einen Leuchffarben-Effekt zu erreichen, sind den Grundmassen Leuchffarben-Pigmente in Form von Pasten oder Feststoffen beigemischt, beispielsweise die fluoreszierenden Farb-Pigmente Yellow 101 (C.I. 48052) oder Green (C.I. 74265). Ebenso sind Feststoffminen bekannt, bei denen der farbgebende Anteil aus Pigmenten besteht, die Polyesteramid-Harz oder Harze auf der Basis von Formaldehyd enthalten. Aus der JP-A-52 134 519 sind Fluoreszenz-Pastellstifte bekannt, deren Mine eine Wachsmatrix enthält. Als Färbemittel sind der Wachsmatrix Fluoreszenzpigmente beigefügt. Die Fluoreszenzpigmente sind durch Einfärben von Harzen, wie Methylmethacrylatharz, Vinylchloridharz, Styrolharz, Amidharz, Vinylacetatharz usw. mit Fluoreszenzfarbstoffen erhalten. Die Farb-pigmente der bekannten Feststoffminen werden üblicherweise durch eine Polymerisation von entsprechenden Monomeren erhalten. Eine solche Polymerisation kann beispielsweise in wässriger Lösung unter Zusatz von Farbstoffen durchgeführt werden. Im Anschluß an die Polymerisation werden die Kunststoffpartikel abgetrennt und getrocknet. Sie liegen also, wenn sie als Farbmittel für Farbstoffminen-Zusammensetzungen verwendet werden, in Pulverform vor. Nachteilig dabei ist, daß bei dem Trocknungsvorgang die in der Dispersion zunächst in einer kleinen Korngröße vorliegenden Kunststoffpartikel sich zu Agglomeraten zusammenlagern. Es entstehen also unvermeidbar Sekundärstrukturen. Die Korngröße der auf die geschilderte Weise erhaltenen Sekundär-Partikel ist also stets wesentlich größer als es der ursprünglichen Partikelgröße in der Dispersion entspricht. Größere Partikel wirken sich aber sowohl nachteilig auf das Abstrichverhalten von Farbstiftminen, als auch auf deren Festigkeit und Konsistenz aus. Je mehr solche Partikel vorhanden sind, und vor allen Dingen je größer diese Partikel sind, desto brüchiger und krümeliger wird die Stiftminenmasse. Dies macht sich insbesondere dann bemerkbar, wenn mit solchen Minen auf gestrichenen oder lackierten Papieren Abstriche erzeugt werden sollen.

Diese bekannten Feststoffminen haben weiterhin den Nachteil, daß sie auf sogenannten gestrichenen bzw. lackierten Papieren nur einen farbschwachen Abstrich ergeben. Die Übertragung der Feststoffminenmasse auf die Papieroberfläche erfolgt außerdem nicht kontinuierlich, so daß es zu Unterbrechungen des Abstriches kommt. Um gleichmäßig gefärbte Flächen zu erzeugen, z.B. um eine Textstelle zu markieren, muß die Mine mehrfach über die gleiche Stelle des Papiers geführt werden. Ein weiterer Nachteil der bekannten Stifte besteht darin, daß ihre Leuchtkraft im Vergleich zu beispielsweise Leuchtfarben-Tintenfaserschreibern geringer ist.

Davon ausgehend ist es die Aufgabe der Erfindung, ein Herstellungsverfahren für eine Feststoffmine vorzusehen, die sich auf gestrichenen Papieren leicht und gleichmäßig abstreichen läßt und eine Farbmarkierung mit hoher Leuchtkraft ergibt. Der Abstrich der Feststoffmine soll dabei jedoch derart sein, daß er dick genug ist, um die gewünschte Leuchtkraft und Farbsättigung zu erzeugen und andererseits aber dünn genug ist, daß damit markierte Textstellen noch gut lesbar sind. Eine weitere Aufgabe der Erfindung besteht darin, eine Feststoffmine zu schaffen, die sich außer für gestrichene Papiere auch für alle sonstigen Papierarten und insbesondere auch für Papiere mit einer Wärme- oder druckempfindlichen Schicht eignet. Diese Aufgabe wird durch die Merkmale des Anspruches 1 gelöst.

Danach wird einer Grundmasse auf der Basis von Fettsäurederivaten und/oder Wachsen, einem Bindemittel und Aluminiumsilikat als Füllstoff eine wässrige Dispersion von Kunststoffpolymer-Teilchen als Farbmittel beigefügt. Die Kunststoffpolymer-Teilchen sind durch Dispersionspolymerisation unter Zusatz von einem oder mehreren fluoreszierenden Farbstoffen erhalten und sind Homopolymerisate aus einem oder Copolymerisate aus zwei oder mehreren Monomeren aus der Gruppe der Acrylsäure-Derivate und Styrol. Mit der erfindungsgemäßen Mine lassen sich farbkräftige und fluoreszierende Abstriche auf den o.g. Papieren erzeugen. Auch lassen sich damit mit wasserlöslichen Tinten geschriebene Textstellen verwischungsfrei markieren. Im Gegensatz zu den bekannten Leuchffarben-Faserschreibern sind bei Stiften mit Feststoffminen höhere Anpreßkräfte erforderlich, um einen Abstrich auf dem Papier zu erzeugen. Die erfindungsgemäße Mine weist daher eine Konsistenz auf, die ihr einerseits eine genügend hohe mechanische Stabilität verleiht und andererseits so weich ist, daß empfindliche Papiere wie Thermokopier- und Durchschreibepapiere nicht verletzt werden. In diesem Fall könnte nämlich der Farbstoff mit den Wirkstoffen der Beschichtungen dieser Papiere in Kontakt kommen und farblich verändert werden. Auch sind die genannten Papiere relativ dünn und leicht zerreißbar. Bei herkömmlichen Feststoffminen sind oft Pigmente zugesetzt, die auf der Basis von Polyesteramid-Harz oder Harzen auf Formaldehydbasis hergestellt sind. Diese Pigmente weisen eine relativ große Härte auf und führen leicht zu einer Verletzung der Oberfläche von beschichteten oder gestrichenen Papieren. Demgegenüber ist das in der erfindungsgemäßen Feststoffmine verwendete Farbmittel eine Dispersion aus weichen Kunststoffpolymer-Teilchen, die mit einem fluoreszierenden Farbstoff angefärbt sind und im wesentlichen aus Homo- oder Copolymerisaten von Monomeren aus der Gruppe der Acrylsäure-derivate und Styrol bestehen. Derartige Dispersionen sind an sich bekannt und werden für Markierflüssigkeiten von Faserschreibern verwendet.

In den Ansprüchen 2 bis 4 sind vorteilhafte Zusammensetzungen für die Kunststoffpolymer-Teilchen genannt. Es hat sich gezeigt, daß sich besonders gleichmäßige und farbkräftige Abstriche erzeugen lassen, wenn die Kunststoffpolymer-Teilchen der der Minengrundmasse zugesetzten Dispersion eine Korngröße zwischen 0,2 µm und 6 µm aufweisen.

Die gemäß den Ansprüchen 6 bis 7 vorgeschlagenen Farbstoffe, wie beispielsweise C.I.Basic Yellow 40 und C.I.Basic Red 1, gewährleisten eine leichte Einfärbbarkeit der Kunststoffpolymer-Teilchen und verleihen der Feststoffmine eine hohe Leuchtkraft.

Die weiteren Unteransprüche befassen sich mit vorteilhaften Zusammensetzungen der Grundmasse der Feststoffmine und mit vorteilhaften Gesamtrezepturen.

Die Erfindung wird anhand von Beispielen näher erläutert:

### Beispiel 1:

- Methylzellulose:: 6 g
- Calziumstearat:: 24 g
- Aluminiumsilikat:: 60 g
- Stearinsäureethylester:: 80 g
- Dispersion 1:: 75 g

Die Dispersion 1 weist einen Feststoffanteil von etwa 40 Gew. % auf. Die darin enthaltenen Kunststoffpolymer-Teilchen bestehen im wesentlichen aus einer Mischung von Glycidylmethacrylat-Methylmethacrylat-Styrol-Copolymerisat und Methacrylnitril-Methacrylsäure-Copolymerisat. Zur Stabilisierung der Dispersion sowie als Netzmittel können Substanzen, wie Natriumlaurylsulfat, Polyoxyethylen(23)-Laurylether und Natrium Dihexylsulfosuccinat zugesetzt werden. Deren Gesamtanteil beträgt in der Summe maximal 10 Gew. % der Dispersion. Als weiterer Zusatz ist ein Feuchthaltemittel, wie z.B. Propylenglykol, mit einem Anteil von bis zu 20 % enthalten.

Die Dispersion 1 wird in üblicher Weise dadurch erhalten, daß die Monomere in wässriger Lösung unter Zusatz der obengenannten Dispergatoren und gegebenenfalls unter Zusatz eines Starters wie Persulfat oder Wasserstoffperoxyd polymerisiert werden. Im vorliegenden Beispiel wurden die Monomere zu jeweils gleichen Anteilen zugesetzt. Das Mischungsverhältnis der Monomere kann jedoch in weiten Bereichen variiert werden. Die Teilchengröße der erhaltenen Kunststoffpolymer-Dispersion sollte etwa zwischen 0,2 µ und 6 µ liegen. Die Herstellung derartiger Dispersionen, die im übrigen auch im Handel erhältlich sind, ist im Detail in der EP-PS 0 344 379 beschrieben. Die Kunststoffpolymer-Teilchen werden zum Schluß durch Zugabe einer aus den basischen Farbstoffen C.I. Basic Yellow 40, C.I. Basic Red 1 und C.I. Basic Violet 11 bestehenden Farbmischung angefärbt.

Die in der Rezeptur des Beispiels 1 genannten Bestandteile werden in üblicher Weise mit einem Mischer oder Kneter innig vermischt. Die erhaltene Paste wird dann zu Strängen gepreßt, die abgelängt und getrocknet werden. Die getrockneten Zuschnitte können dann zu kunststoff- oder holzummantelten Stiften weiterverarbeitet werden. Es können z.B. aber auch dickere Stränge für die Herstellung von Markierkreiden o.ä. extrudiert werden.

### Beispiel 2:

- Methylzellulose:: 6 g
- Aluminiumpalmitat:: 6,4 g
- Aluminiumsilikat:: 35 g
- Ölsäureethylester:: 28,6 g
- Dispersion 2:: 60 g

Die Dispersion 2 wird wie im Beispiel 2 beschrieben durch Copolymerisation der Monomere, Acrylnitril, Methacrylsäure und Styrol erhalten. Auch hier ist es möglich, die Anteile in weiten Grenzen zu variieren, ohne die Eigenschaften der späteren Kunststoffpolymer-Dispersion wesentlich zu verändern. Auch diese Dispersion kann in ähnlicher Form im Handel bezogen werden, so daß u.U. auf deren Herstellung verzichtet werden kann. Die Kunststoffpolymer-Teilchen werden in einem weiteren Schritt mit dem Farbstoff C.I. Basic Yellow 40 eingefärbt. Als Dispergatoren und Feuchthaltemittel werden dieselben Stoffe wie im Beispiel 1 zugesetzt. Die weitere Verarbeitung entspricht ebenfalls der von Beispiel 1.

## Patentansprüche

1. Verfahren zur Herstellung einer Leuchffarben-Feststoffmine insbesondere für Buntstifte, mit einer Grundmasse auf der Basis von Fettsäurederivaten und/oder Wachsen, einem Bindemittel und mit Aluminiumsilikat als Füllstoff
dadurch gekennzeichnet,
daß der Grundmasse mit einem oder mehreren fluoreszierenden Farbstoffen angefärbte Kunststoffpolymer-Teilchen in Form einer Dispersion zugesetzt werden, wobei
- die Dispersion durch Polymerisation von Kunststoff-Monomeren in wässriger Lösung unter Zugabe des fluoreszierenden Farbstoffs erhalten ist, und
- die Kunststoff-Polymerteilchen Homopolymerisate aus einem oder Copolymerisate aus zwei oder mehreren Monomeren aus der Gruppe der Acrylsäure-Derivate und Styrol sind.

2. Verfahren nach Anspruch 1,
dadurch gekennzeichnet,
daß Kunststoffpolymer-Teilchen Copolymerisate aus Acrylnitril, Acryl- oder Methacrylsäure und Styrol sind.

3. Verfahren nach Anspruch 1,
dadurch gekennzeichnet,
daß die Kunststoffpolymer-Teilchen aus einer Mischung aus zwei unterschiedlichen Copolymerisaten bestehen, wobei sich das eine aus Methacrylnitril und Methacrylsäure und das andere sich aus Glycidylmethacrylat, Methacrylat und Styrol zusammensetzt.

4. Verfahren nach Anspruch 3,
dadurch gekennzeichnet,
daß die Dispersion zusätzlich Kunststoffpolymer-Teilchen nach Anspruch 2 enthält.

5. Verfahren nach einem der Ansprüche 1 bis 4,
dadurch gekennzeichnet,
daß die Kunststoffpolymer-Teilchen eine Korngröße von 0,2 µ bis 6 µ aufweisen.

6. Verfahren nach Anspruch 5,
dadurch gekennzeichnet,
daß die Kunststoffpolymer-Teilchen mit einer Mischung der Farbstoffe C.I. Basic Yellow 40, C.I. Basic Red 1 und C.I. Basic Violet 11 angefärbt sind.

7. Verfahren nach Anspruch 5,
dadurch gekennzeichnet,
daß die Kunststoffpolymer-Teilchen mit dem Farbstoff C.I. Basic Yellow 40 angefärbt sind.

8. Verfahren nach einem oder mehreren der Ansprüche 1 bis 7,
dadurch gekennzeichnet,
daß Feuchthaltemittel wie Propylenglykol und Dispergatoren bzw. Netzmittel, wie Natriumlaurylsulfat und/oder Polyoxyethylen (23)-Laurylether und/oder Natrium-Dihexylsulfosuccinat enthalten sind.

9. Verfahren nach einem oder mehreren der Ansprüche 1 bis 8,
dadurch gekennzeichnet,
daß die Kunststoffpolymer-Teilchen aus einer Dispersion mit einem Feststoffgehalt von 20% bis 50% stammen.

10. Verfahren nach Anspruch 9,
dadurch gekennzeichnet,
daß als Bindemittel Zellulosederivate enthalten sind.

11. Verfahren nach einem oder mehreren der Ansprüche 1 bis 10,
dadurch gekennzeichnet,
daß wenigstens ein Fettsäureester und wenigstens ein Fettsäuresalz enthalten sind, wobei die Kationen des Fettsäuresalzes aus den Hauptgruppen 1 bis 3 des Periodensystems der Elemente stammen.

12. Verfahren nach einem oder mehreren der Ansprüche 1 bis 11,
gekennzeichnet durch
folgende Zusammensetzung (Gew.%):
Bindemittel: 0,5 - 10%
Fettsäurederivate: 20 - 70%
Füllstoff: 5 - 60%
Kunststoffpolymer-Teilchen: 5 - 50%

13. Verfahren nach Anspruch 12,
gekennzeichnet durch
folgende Zusammensetzung (Gew.%):
Methylzellulose: 3,0%
Calciumstearat: 12,0%
Aluminiumsilikat: 30,0%
Stearinsäureethylester: 40,0%
Kunststoffpolymer-Dispersion: 15,0%,
wobei die Kunststoffpolymer-Teilchen
- im wesentlichen aus einem Copolymerisat aus Methacrylnitril und Methacrylsäure und
einem Copolymerisat aus Glycidylmethacrylat, Methylmethacrylat und Styrol bestehen, und
- mit den Farbstoffen
C.I. Basic Yellow 40,
C.I. Basic Red 1 und
C.I. Basic Violet 11 angefärbt sind.

14. Verfahren nach Anspruch 12,
gekennzeichnet durch
folgende Zusammensetzung (Gew.%):
Methylzellulose: 6,0%
Aluminiumpalmitat: 6,4%
Aluminiumsilikat: 35,0%
Ölsäureethylester: 28,6%
Kunststoffpolymer-Teilchen: 24,0%,
wobei die Kunststoffpolymer-Teilchen im wesentlichen aus einem Copolymerisat aus Acrylnitril, Methacrylsäure und/oder Acrylsäure und Styrol bestehen und mit dem Farbstoff C.I. Basic Yellow 40 angefärbt sind.

## Claims

1. Process for the production of a luminous colour solid marking lead, in particular for coloured pencils, having a base substance based on fatty acid derivatives and/or waxes, a binder and having aluminium silicate as a filler, characterized in that the synthetic polymer particles, coloured with one or more fluorescent dyestuffs, are added in the form of a dispersion to the base substance,
- the dispersion being obtained by polymerization of monomers of the synthetic polymer in aqueous solution, with addition of the fluorescent dyestuff, and
- the synthetic polymer particles being homopolymers of one or copolymers of two or more monomers from the group consisting of acrylic acid derivatives and styrene.

2. Process according to Claim 1, characterized in that the synthetic polymer particles are copolymers of acrylonitrile, acrylic or methacrylic acid and styrene.

3. Process according to Claim 1, characterized in that the synthetic polymer particles comprise a mixture of two different copolymers, one being composed of methacrylonitrile and methacrylic acid and the other being composed of glycidyl methacrylate, methacrylate and styrene.

4. Process according to Claim 3, characterised in that the dispersion additionally comprises synthetic polymer particles according to Claim 2.

5. Process according to one of Claims 1 to 4, characterized in that the synthetic polymer particles have a particle size of 0.2 µ to 6 µ.

6. Process according to Claim 5, characterized in that the synthetic polymer particles are coloured with a mixture of the dyestuffs C.I. Basic Yellow 40, C.I. Basic Red 1 and C.I. Basic Violet 11.

7. Process according to Claim 5, characterized in that the synthetic polymer particles are coloured with the dyestuff C.I. Basic Yellow 40.

8. Process according to one or more of Claims 1 to 7, characterized in that humectants, such as propylene glycol, and dispersing agents or wetting agents, such as sodium lauryl sulphate and/or polyoxyethylene (23)-lauryl ether and/or sodium dihexyl sulphosuccinate are contained therein.

9. Process according to one or more of Claims 1 to 8, characterized in that the synthetic polymer particles originate from a dispersion having a solids content of 20% to 50%.

10. Process according to Claim 9, characterized in that cellulose derivatives are contained therein as a binder.

11. Process according to one or more of Claims 1 to 10, characterized in that at least one fatty acid ester and at least one fatty acid salt are contained therein, the cations of the fatty acid salt originating from main groups 1 to 3 of the Periodic Table of the Elements.

12. Process according to one or more of Claims 1 to 11, characterized by the following composition (% by weight) :
Binder: 0.5 - 10%
Fatty acid derivatives: 20 - 70%
Filler: 5 - 60%
Synthetic polymer particles: 5 - 50%

13. Process according to Claim 12, characterized by the following composition (% by weight) :
Methylcellulose: 3.0%
Calcium stearate: 12.0%
Aluminium silicate: 30.0%
Ethyl stearate: 40.0%
Synthetic polymer dispersion: 15.0%,
the synthetic polymer particles
- essentially comprising a copolymer of methacrylonitrile and methacrylic acid and
a copolymer of glycidyl methacrylate, methyl methacrylate and styrene and
- being coloured with the dyestuffs
C.I. Basic Yellow 40,
C.I. Basic Red 1 and
C.I. Basic Violet 11.

14. Process according to Claim 12, characterized by the following composition (% by weight) :
Methylcellulose: 6.0%
Aluminium palmitate: 6.4%
Aluminium silicate: 35.0%
Ethyl oleate: 28.6%
Synthetic polymer particles: 24.0%,
these synthetic polymer particles essentially comprising a copolymer of acrylonitrile, methacrylic acid and/or acrylic acid and styrene and being coloured with the dyestuff C.I. Basic Yellow 40.

## Revendications

1. Procédé pour la préparation d'une couleur fluorescente-mine graphique solide en particulier pour des crayons de couleur, avec une masse de base sur la base de dérivés d'acides gras et/ou de cires, d'un liant et avec du silicate d'aluminium en tant que matière de remplissage, caractérisé en ce que des particules de polymères de matières synthétiques colorées avec un ou plusieurs colorants fluorescents sont ajoutées à la masse de base dans la forme d'une dispersion,
- la dispersion étant obtenue par polymérisation de monomères de matières synthétiques dans une solution aqueuse avec addition du colorant fluorescent, et
- les particules de polymères de matières synthétiques sont des homopolymères d'un monomère ou des copolymères de deux ou plusieurs monomères provenant du groupe des dérivés de l'acide acrylique et du styrène.

2. Procédé selon la revendication 1, caractérisé en ce que les particules de polymères de matières synthétiques sont des copolymères d'acrylonitrile, d'acide acrylique ou méthacrylique et de styrène.

3. Procédé selon la revendication 1, caractérisé en ce que les particules de polymères de matières synthétiques sont constituées d'un mélange de deux copolymères différents, l'un étant constitué de méthacrylonitrile et d'acide méthacrylique et l'autre de méthacrylate de glycidyle, de méthacrylate et de styrène.

4. Procédé selon la revendication 3, caractérisé en ce que la dispersion contient en outre des particules de polymères de matières synthétiques selon la revendication 2.

5. Procédé selon l'une quelconque des revendications 1 à 4, caractérisé en ce que les particules de polymères de matières synthétiques présentent une taille de particules de 0,2 µ à 6 µ.

6. Procédé selon la revendication 5, caractérisé en ce que les particules de polymères de matières synthétiques sont colorées avec un mélange des colorants C.I. Basic Yellow 40, C.I. Basic Red 1 et C.I. Basic Violet 11.

7. Procédé selon la revendication 5, caractérisé en ce que les particules de polymères de matières synthétiques sont colorées avec le colorant C.I. Basic Yellow 40.

8. Procédé selon l'une ou plusieurs quelconques des revendications 1 à 7, caractérisé en ce que sont contenus un agent maintenant l'humidité comme le propylèneglycol et un émulsionnant ou agent dispersant, comme le laurylsulfate de sodium et/ou le polyoxyéthylène (23)-éther laurylique et/ou le sulfosuccinate de sodium-dihexyle.

9. Procédé selon l'une ou plusieurs quelconques des revendications 1 à 8, caractérisé en ce que les particules de polymères de matières synthétiques proviennent d'une dispersion présentant une teneur en matières solides de 20 % à 50 %.

10. Procédé selon la revendication 9, caractérisé en ce que sont contenus en tant que liant des dérivés de cellulose.

11. Procédé selon l'une ou plusieurs quelconques des revendications 1 à 10, caractérisé en ce que sont contenus au moins un ester d'acide gras et au moins un sel d'acide gras, les cations du sel d'acide gras provenant des groupes principaux 1 à 3 du système périodique des éléments.

12. Procédé selon l'une ou plusieurs quelconques des revendications 1 à 11, caractérisé par la composition suivante (% en poids) :
liant: 0,5 - 10 %
dérivés d'acides gras : 20 - 70 %
matière de remplissage : 5 - 60 %
particules de polymères de matières synthétiques : 5 - 50 %

13. Procédé selon la revendication 12, caractérisé par la composition suivante (% en poids) :
méthylcellulose : 3,0 %
stéarate de calcium : 12,0 %
silicate d'aluminium : 30,0 %
ester éthylique d'acide stéarique : 40,0 %
dispersion de polymère de matière synthétique : 15,0 %
les particules de polymères de matières synthétiques
- étant essentiellement constituées d'un copolymère de méthacrylonitrile et d'acide méthacrylique et
d'un copolymère de méthacrylate de glycidyle, de méthacrylate de méthyle et de styrène, et
- étant colorées avec les colorants
C.I. Basic Yellow 40,
C.I. Basic Red 1 et
C.I. Basic Violet 11.

14. Procédé selon la revendication 12, caractérisé par la composition suivante (% en poids) :
méthylcellulose: 6,0 %
palmitate d'aluminium : 6,4 %
silicate d'aluminium : 35,0 %
ester éthylique d'acide oléique : 28,6 %
particules de polymères de matières synthétiques : 24,0 %
les particules de polymères de matières synthétiques étant essentiellement constituées d'un copolymère d'acrylonitrile, d'acide méthacrylique et/ou d'acide acrylique et de styrène et étant colorées avec le colorant C.I. Basic Yellow 40.
